# FASCICULE DE BREVET EUROPEEN

(11) **EP 2 279 278 B1**
(45) Date de publication et mention de la délivrance du brevet: **25.12.2019**
(21) Numéro de dépôt: 08805572.8
(22) Date de dépôt: 15.05.2008
(51) Int. Cl.: C23C 2/00, F16C 29/04, C23C 2/20

(54) **SYSTÈME ET MÉTHODE ADAPTÉS AU GUIDAGE D'UN DISPOSITIF D'ESSORAGE D'UN PRODUIT DE GALVANISATION**
SYSTEM UND VERFAHREN ZUM FÜHREN EINER WISCHVORRICHTUNG FÜR EIN GALVANISIERUNGSPRODUKT
SYSTEM AND METHOD FOR GUIDING A GALVANISING PRODUCT WIPING DEVICE

(43) Date de publication de la demande: 02.02.2011
(73) Titulaire: Primetals Technologies France SAS, 42600 Savigneux (FR)
(72) Inventeur: BOURGIER, Pierre, F-42290 Sorbiers (FR); HARDY, Jean-Jacques, F-69540 Irigny (FR)
(74) Mandataire: Metals@Linz
(86) Numéro de dépôt international: PCT/FR2008/000673
(87) Numéro de publication internationale: WO 2009/138576

(56) Documents cités:
- US-A- 5 934 029

## Description

La présente invention concerne un système et méthode de adaptés au guidage, en particulier d'un dispositif d'essorage d'un produit de galvanisation, selon les préambules des revendications 1 et 8.

En particulier mais non limitativement, l'invention se rapporte au guidage de supports de dispositif de portage d'essoreurs à air soufflé afin d'essorer du zinc liquide sur une bande d'acier en défilement (continu) à sa sortie d'un bain de revêtement d'une ligne de galvanisation en continu. Chacun des déflecteurs doit être disposé à chaque arête de la bande. Par extension, l'invention présente une solution de guidage et portage d'extrémités de poutres en mouvement libre induit par des supports motorisés à chacune des extrémités. Ces extrémités sont généralement disposées sur un système de chariots (telles que des tables de déplacement motoriquement commandables sous trois dimensions) qui assurent au moins un mouvement de base ponctuellement « rotulien » de ladite extrémité de poutre, telle qu'une poutre de maintien d'essoreur.

Plus généralement, afin d'améliorer leur résistance à la corrosion dans certaines applications comme le bâtiment, l'automobile ou l'électroménager, on dépose à la surface des bandes d'acier un revêtement d'un produit (liquide puis solide) de galvanisation tel que du zinc ou un alliage à base de zinc. Ce revêtement est réalisé sur des lignes continues de galvanisation (dans lesquelles la bande transite) qui comportent typiquement :
- Une section d'entrée avec une ou deux dérouleuses de bande, une cisaille guillotine, une soudeuse de raboutage permettant de raccorder la queue d'une bande issue d'une des dérouleuses à la tête de la prochaine bande issue de l'autre dérouleuse et assurant ainsi un fonctionnement continu de la ligne, un accumulateur de bande , qui restitue à la ligne de la bande préalablement accumulée lorsqu'on bloque le déroulement en amont de l'accumulateur pour réaliser une soudure de raboutage ;
- Une section de dégraissage des bandes laminées à froid ou de décapage acide des bandes laminées à chaud ;
- Un four de recuit qui assure aussi un maintien à température contrôlée de la bande avant son entrée dans un bain de zinc en fusion ;
- Une section de galvanisation comprenant le bain de zinc dans lequel est immergée la bande, puis un dispositif d'essorage du zinc liquide, éventuellement un four d'alliation à induction, un espace de refroidissement et un bac de trempe ;
- Une section de sortie avec un laminoir de type « Skin-Pass », une section de passivation, un accumulateur de sortie, une cisaille et une ou deux enrouleuses de bande.

A sa sortie du four, la bande est immergée obliquement dans un bain d'alliage de zinc liquide (en tant que produit liquide de galvanisation), défléchie verticalement par un rouleau de fond immergé dans le bain, passe ensuite sur un rouleau dit « anti-tuile » destiné à corriger la courbure latérale de la bande issue de son passage sur le rouleau de fond, puis passe ur un rouleau dit « de ligne de passe » destiné à ajuster sa trajectoire verticale en sortie de bain. A sa sortie du bain de revêtement, la bande est recouverte, sur ses deux faces, d'une couche de zinc liquide d'épaisseur plus ou moins constante. Il est nécessaire d'égaliser transversalement et longitudinalement l'épaisseur du zinc déposé à une valeur aussi proche que possible de l'objectif visé qui allie recherche de performance dans le domaine de la protection contre la corrosion et optimisation de la quantité de zinc consommé. Pour cela, des dispositifs d'essorage du zinc liquide sont disposés de part et d'autre en surface de la bande afin d'assurer l'essorage du zinc liquide sur les deux faces de bande.

De tels systèmes d'essorage ont été abondamment décrits, par exemple dans JP 08-2260122 qui met l'accent sur la nécessité d'un centrage parfait de la bande entre deux essoreurs de part et d'autre de la bande . En effet, l'effet d'essorage est très sensible à la pression d'air soufflé et à la distance entre des buses de soufflage et la bande. Afin d'assurer un centrage correct, chacun des deux essoreurs est équipé, à chacune de ses extrémités, d'un système de réglage indépendant dont des moteurs sont pilotés par des dispositifs de mesure d'épaisseur de zinc situés en aval dans le sens de défilement de la bande.

Dans cette optique, WO 03/018859 décrit un système de contrôle de la position des essoreurs par pilotage séparé de quatre moteurs en fonction de l'épaisseur de zinc mesurée. Il prend aussi en compte l'impact sur un centrage de courbure naturelle prise par la bande et qu'on nomme couramment par effet « tuile ». US 5 934 029 A1 décrit un système de guidage d'un chariot dans un châssis pour réduire les effets des vibrations.

D'autre part, la distance entre la surface du bain de revêtement liquide et les essoreurs est également un paramètre influant sur le réglage de l'opération d'essorage. Il s'ensuit que, de manière usuelle, chacun des essoreurs placés de part et d'autre de la bande dispose, à chacune de ses extrémités, des dispositifs de positionnement suivants :
- Un réglage en altitude apte à déplacer verticalement chaque extrémité de chaque essoreur (ou par extension de sa poutre de maintien). En règle générale et sauf incidents, le mouvement de chaque extrémité est synchrone ;
- Un réglage dans un plan horizontal de distance par rapport à la bande apte à déplacer horizontalement chaque extrémité de chaque essoreur (ou sa poutre de maintien) dans une direction perpendiculaire à la surface de la bande. Compte tenu de la position du plan de la bande en sortie du bain de revêtement et de son éventuelle « tuile », les mouvements de chaque extrémité sont généralement différentiels.
- Un réglage dans un plan horizontal parallèle au plan de la bande assurant le bon positionnement horizontal relatif des extrémités des fentes de soufflage des deux essoreurs. Ce réglage, par définition différentiel, est généralement réalisé en usine.

Ces trois mouvements de chaque extrémité de chacun des essoreurs peuvent, pour certains, être réglés indépendamment par des actionneurs et il s'avère donc nécessaire d'assurer une possibilité d'adaptation aux organes de fixation de chaque extrémité. D'autre part, tous les actionneurs peuvent être sujets soit à un incident mécanique ou à une perte de contrôle pouvant entrainer des désalignements exagérés d'une extrémité par rapport à l'autre et endommager tout ou partie du dispositif d'essorage. Enfin, les variations de température subies lors de la mise en place du dispositif d'essorage au-dessus du bain de zinc en fusion induisent une forte dilatation et une augmentation corrélative de la longueur des essoreurs qui doit pouvoir être encaissée sans générer de contraintes dans les essoreurs eux-mêmes ou dans leurs supports.

Un but de la présente invention est de proposer un système de guidage, et une méthode associée, permettant à une extrémité d'une poutre mobile, telle qu'une poutre portant un essoreur d'un produit de galvanisation sur une bande d'acier, un déplacement guidé à haut degré de liberté tout en minimisant chaque contrainte mécanique.

Dans ce sens, un dispositif de portage des extrémités d'essoreurs d'une installation d'essorage de bande par soufflage d'air ou par champ électromagnétique doit permettre d'assurer aux dits essoreurs les degrés de liberté voulus pour permettre, sans contraintes, un réglage de leurs positions de travail, d'encaisser leurs dilatations et de limiter considérablement les conséquences d'éventuelles défaillances de leurs actuateurs/actionneurs dynamiques. Le système visé par l'invention doit ainsi être adapté à tous types de dispositifs d'essorage dont les extrémités sont mues par des actionneurs indépendants de portage assurant au moins un réglage vertical d'altitude, un réglage horizontal perpendiculaire au plan de la bande et un réglage horizontal parallèle au plan de la bande en défilement entre les essoreurs.

Il doit aussi permettre à chacune des extrémités portées d'une poutre les quatre degrés de liberté suivants:
- Une possibilité de supporter un écart d'altitude d'une extrémité par rapport à l'autre dans un plan vertical parallèle au plan de la bande,
- Une possibilité de supporter un écart de position d'une extrémité par rapport à l'autre dans un plan horizontal perpendiculaire au plan de la bande,
- Une possibilité de supporter le cumul d'un écart d'altitude dans un plan vertical parallèle au plan de la bande et d'un écart de position dans un plan horizontal perpendiculaire au plan de la bande,
- Une possibilité de conserver dans tous les cas un déplacement de l'ensemble de l'essoreur selon son axe longitudinal.

Afin d'assurer ces quatre degrés de liberté, un tel système de guidage d'une extrémité se doit de comporter :
- Un premier axe de pivotement horizontal perpendiculaire à l'axe longitudinal de l'essoreur,
- Un second axe de pivotement vertical perpendiculaire à l'axe longitudinal de l'essoreur et perpendiculaire au premier axe de pivotement,
- Un guidage linéaire aligné par rapport à l'axe longitudinal de l'essoreur.

L'invention propose ainsi deux solutions sous forme d'un système de guidage et d'une méthode de guidage selon les revendications 1 et 8.

Un tel système consiste en un système de guidage d'un chariot mobile dans un châssis pour lequel :
- le châssis est muni de trois pistes parallèles de guidage linéaire parmi lesquelles une première piste s'étend centralement sur le châssis et une deuxième et une troisième piste sont disposées latéralement à la première piste,
- le chariot dispose d'au moins deux axes de rotation, un premier axe entrainant au moins une première roue dans la première piste de guidage et un second axe entrainant au moins une deuxième et au moins une troisième roue respectivement dans la deuxième et la troisième piste de guidage,
- les deux axes de rotation sont perpendiculaires.

Vu que le défilement de la bande est généralement vertical en sortie de bain de galvanisation, la poutre soutenant un essoreur d'un côté de la bande est déplacée autour et près de l'horizontale. Selon cette configuration, un guidage linéaire aligné par rapport à l'axe longitudinal de l'essoreur est ainsi assuré par une piste de guidage dites « verticale » entre lesquelles se déplace une première roue montée rotative autour d'un axe vertical (ou proche de la verticale) et par deux pistes de guidage horizontal situés de part et d'autre de la piste de guidage verticale parallèlement à celle-ci et comportant chacune la deuxième et la troisième roue, montées rotatives autour d'un axe horizontal commun, se déplaçant entre les deux bandes horizontales de chacun des ensembles de guidage horizontal.

Pour le chariot, il est prévu que l'axe vertical de la première roue est solidaire de l'axe horizontal commun à la deuxième et à la troisième roue et que chaque extrémité de l'essoreur (ou de sa poutre de soutien) est solidarisée avec le chariot de portage par une face d'appui perpendiculaire à l'axe de rotation de la première roue. Un tel chariot rassemblant ces caractéristiques peut être réalisé au moyen d'un monobloc encapsulant les deux axes de rotation croisés et comprenant un moyen de fixation ou d'encastrement de l'extrémité de la poutre.

La première roue est apte, le long de sa piste de guidage, à pivoter autour de l'axe horizontal de rotation de la deuxième et de la troisième roue (perpendiculaire à l'axe longitudinal de l'essoreur) et assure ainsi avantageusement la possibilité de supporter un écart d'altitude d'une extrémité de l'essoreur par rapport à l'autre dans un plan vertical parallèle au plan de la bande.

La deuxième et la troisième roue sont aptes, dans leurs pistes de guidage respectives, à pivoter autour de l'axe vertical de rotation de la première roue (perpendiculaire à l'axe longitudinal de l'essoreur et perpendiculaire au premier axe de pivotement mentionné ci-dessus) et assurent ainsi la possibilité de supporter un écart de position d'une extrémité de l'essoreur par rapport à l'autre dans un plan horizontal perpendiculaire au plan de la bande.

Le système présenté assure donc tous les degrés de liberté souhaités levant ainsi aussi les contraintes mentionnées dans l'état de l'art.

Il est bien entendu possible de réaliser le chariot de différentes façons. Le système présenté ci-dessus est donc une des possibilités adaptée à une méthode de guidage d'une extrémité d'une poutre en mouvement tridimensionnel selon laquelle ladite extrémité est fixée rigidement au chariot. La méthode prévoit également qu'une autre extrémité de ladite poutre est fixée rigidement à un autre chariot, principalement identique au chariot de l'extrémité opposée. La méthode de guidage est donc ensuite adaptée pour le positionnement des extrémités d'essoreurs formant deux poutres distinctes adaptées pour l'essorage de part et d'autre d'une bande en défilement par soufflage d'air ou par champ électromagnétique et pour laquelle les dites extrémités et leurs chariots respectivement fixés sont mues par plusieurs actionneurs indépendants assurant un réglage vertical d'altitude, un réglage horizontal perpendiculaire au plan de la bande et un réglage horizontal parallèle au plan de la bande (donc double pivotement et guidage linéaire pré-cités).

Un ensemble de sous-revendications présente également des avantages de l'invention.

Des exemples de réalisation et d'application sont fournis à l'aide de figures décrites :
- Figure 1: Arrangement d'une ligne de galvanisation au trempé de bandes d'acier en défilement continu,
- Figure 2: Arrangement de la zone du bain de zinc,
- Figure 3: Principe de l'essorage par soufflage d'air,
- Figure 4a, 4b: Arrangement d'un dispositif d'essorage par soufflage d'air,
- Figure 5: Système de guidage selon l'invention,
- Figure 6a,6b: Système de guidage selon l'invention en mode d'inclinaison de poutre,
- Figure 7a,7b: Système de guidage selon l'invention en mode de déviation de poutre,

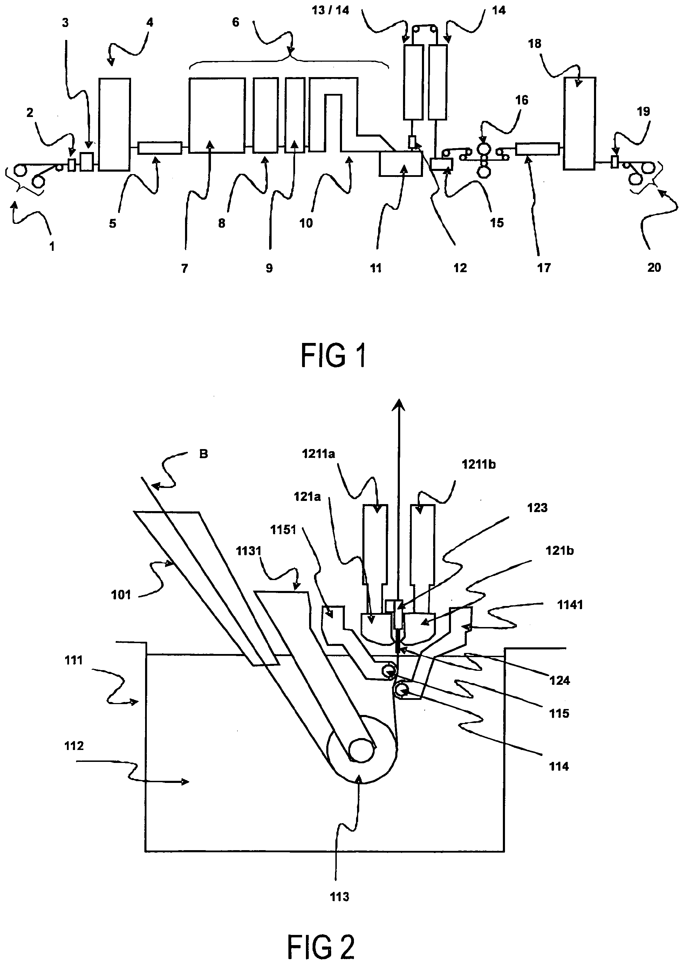

La **figure 1** présente un arrangement typique d'une ligne de galvanisation au trempé de bandes d'acier en défilement continu comprenant suivant le transit séquentiel de la bande dans la ligne:
- Une section d'entrée avec une ou deux dérouleuses de bande (1), une cisaille guillotine (2), une soudeuse de raboutage (3) permettant de raccorder la queue d'une bande issue d'une des dérouleuses à la tête d'une prochaine bande issue de l'autre dérouleuse et assurant ainsi un fonctionnement continu de la ligne, un accumulateur de bande (4) qui restitue à la ligne de la bande préalablement accumulée lorsqu'on arrête le déroulement en amont de l'accumulateur pour réaliser la soudure de raboutage ;
- Une section (5) de dégraissage des bandes laminées à froid ou de décapage acide des bandes laminées à chaud ;
- Un four de recuit (6) composé d'une section de chauffage (7) d'une section de maintien (8) d'une section de refroidissement (9) et d'une section (10) (tel un four) de maintien à température contrôlée de la bande avant son entrée dans un bain de zinc en fusion ;
- Une section de galvanisation à proprement dite avec le bain de zinc (11) dans lequel est immergée la bande, un dispositif d'essorage du zinc liquide (12), éventuellement un four d'alliation à induction (13), un refroidissement (14) et un bac de trempe (15) ;
- Une section de sortie avec un laminoir de type « Skin-Pass » (16), une section de passivation (17), un accumulateur de sortie (18), une cisaille (19) et une ou deux enrouleuses (20) de bande.

La **figure 2** décrit un arrangement de la zone du bain de zinc couplé à un dispositif d'essorage du zinc selon figure 1. Une bande d'acier (B) sort d'un four (10) par une manchette (101) plongeant obliquement dans un bain liquide (112) comprenant un produit liquide de galvanisation et contenu dans un bac de revêtement (111) destiné à permettre le dépôt du produit de galvanisation sur chaque côté de la bande. La bande est défléchie verticalement par un rouleau immergé (113) dit « rouleau de fond » et supporté par deux bras (1131), puis passe au contact d'un rouleau (114) dit « anti tuile » lui-même supporté par deux bras (1141) solidaires ou non de (1131) et destiné à corriger la courbure latérale de la bande issue de son passage sur le rouleau de fond, puis sur un rouleau (115) dit « de ligne de passe » supporté par deux bras (1151) et destiné à ajuster sa trajectoire verticale en sortie du bain. La bande sort ainsi ensuite verticalement du bain de revêtement pour passer dans un dispositif d'essorage (12). La bande sort ainsi verticalement du bain de revêtement pour passer entre deux essoreurs (121a) et (121b) alimentés en air sous pression (1211a) et (1211b) sur au moins toute la largeur de bande. Un bras de maintien (123), parallèle aux essoreurs et situé entre eux, supporte des déflecteurs (124) limitant des perturbations des essoreurs en vis-à-vis aux arêtes de bande.

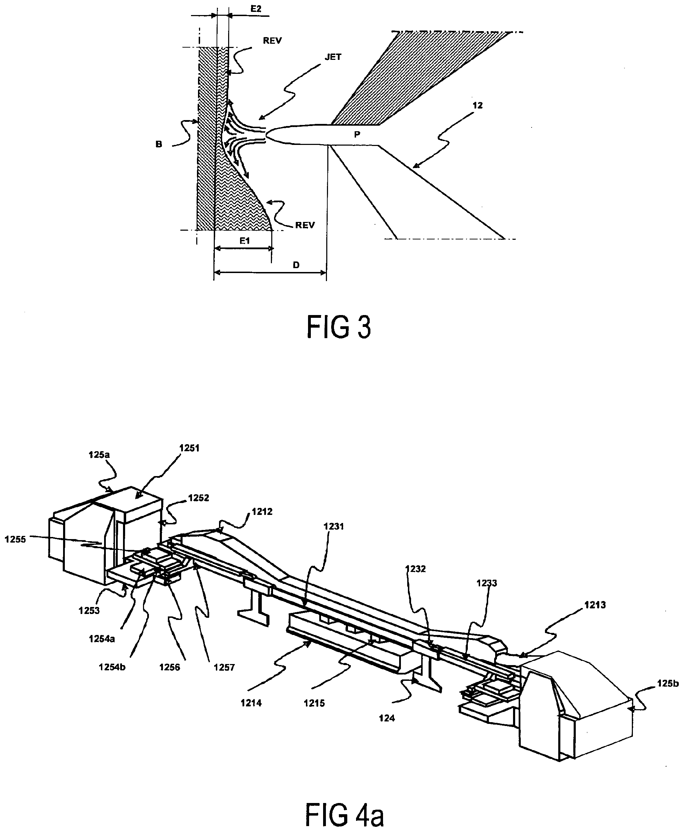

La **figure 3** décrit un principe d'essorage par soufflage d'air sur un des côtés de la bande (B), ledit principe étant applicable dans le cadre de l'invention. Un jet d'air (JET) du dispositif d'essorage (12) selon figure 2 soumet le revêtement liquide (REV) de galvanisation de la bande (B) à un effet de striction qui fait passer son épaisseur avant solidification d'une valeur (E₁) à l'entrée sous le jet jusqu'à une autre valeur (E₂) à la sortie. Une distance (D) entre la bande en défilement vertical, une section de sortie d'air des essoreurs, la pression d'air (P) ainsi que la vitesse de la bande sont des variables essentielles qui influent sur l'opération d'essorage et donc sur les propriétés souhaitées de la couche de galvanisation, telle que son épaisseur finale en sortie du dispositif d'essorage.

**Figure 4a** montre une vue en perspective d'un ensemble complet d'essorage en tant qu'arrangement d'un dispositif d'essorage par soufflage d'air. Pour des raisons de clarté, un seul essoreur a été représenté. Cet ensemble comporte deux systèmes de portage (125a) et (125b) situés latéralement aux arêtes de bande et composés chacun d'un support (1251) sur lequel est fixé une table de déplacement vertical (1252) portant une console sous forme de platine (1253). Cette platine (1253) est équipée de deux ensembles de tables de déplacement horizontal constituées chacune d'une table de déplacement (1254a) agissant dans une direction perpendiculaire au plan de la bande et une seconde table (1254b) agissant perpendiculairement à la première. Un support (1255) solidaires de la console (1253) reçoit une extrémité d'une des poutres soutenant un essoreur (1212), l'autre extrémité opposée de la même poutre étant supportée de la même manière. Cette poutre (1212) reçoit l'air comprimé par une gaine principale (1213) et l'injecte dans un caisson de diffusion (1214) par l'intermédiaire de gaines de distribution (1215). La platine (1253) comporte aussi une table de déplacement horizontal (1256) agissant dans une direction perpendiculaire au plan de la bande et qui porte un support (1257) de l'ensemble de maintien des baffles (123). Cet ensemble de maintien comprend au moins un bras (1231) sur lequel se déplacent deux chariots (1232) actionnés par un organe de déplacement (1233), par exemple un vérin. Chaque chariot (1232) porte un baffle (124).

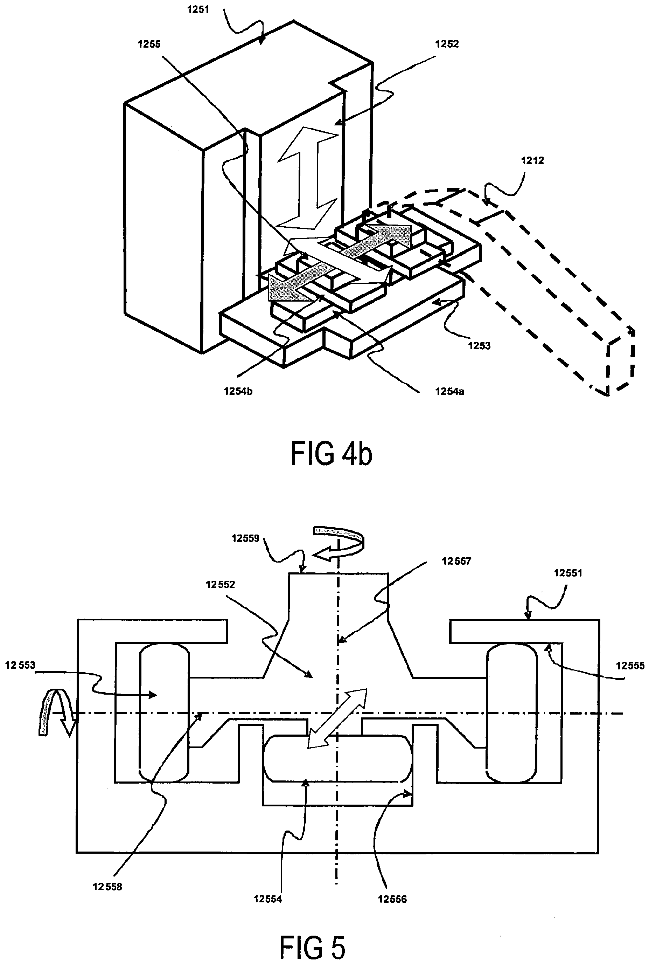

La **figure 4b** montre plus en détail l'arrangement d'un dispositif d'essorage par soufflage d'air à proximité des différentes tables de positionnement des essoreurs placées aux extrémités de poutre (1212) soutenant les essoreurs. Une table de déplacement vertical (1252) portée par un support (1251) actionne une platine en tant que console (1253) qui elle-même porte deux tables de déplacement horizontal (1254a) agissant perpendiculairement au plan de la bande et deux tables de déplacement horizontal (1254b) agissant perpendiculairement aux tables (1254a). L'ensemble des tables de déplacement (1254a, 1254b) actionnent des autres supports (1255) qui portent les extrémités des poutres de diffuseurs (1212).

**Figure 5** présente un système de guidage d'un chariot (12552) selon l'invention, intégré dans un châssis (12551), lequel châssis étant adapté à être disposé sur le support actionné (1255) selon la figure 4b.

Le système de guidage du chariot (12552) dans le châssis (12551) comprend ainsi les caractéristiques suivantes :
- le châssis (12551) est muni de trois pistes parallèles (12555, 12556) de guidage linéaire parmi lesquelles une première piste (12556) s'étend centralement sur le châssis et une deuxième et une troisième piste (12555) sont disposées latéralement à la première piste,
- le chariot (12552) dispose d'au moins deux axes de rotation (12557, 12558), un premier axe (12557) entrainant au moins une première roue (12554) dans la première piste de guidage (12556) et un second axe (12558) entrainant au moins une deuxième et au moins une troisième roue (12553) respectivement dans la deuxième et la troisième piste de guidage (12555),
- les deux axes de rotation (12557, 12558) sont perpendiculaires.

De cette façon, tous les degrés de liberté souhaités sont avantageusement atteints (double pivotement vertical/horizontal du chariot autour des axes de rotation - tel qu'un effet ponctuel de rotule - et guidage linéaire horizontal en direction d'une arête de bande).

L'invention peut prévoir que les deux axes de rotation (12557, 12558) sont exactement sécants, ce qui facilite le double pivotement du chariot relativement au châssis autour d'un seul des axes, mais aussi autour des deux axes simultanément.

Plus en détail, le système de guidage prévoit que :
- chaque piste de guidage comprend un fond et deux côtés,
- lesdits côtés sont parallèles à l'axe de rotation de la roue entrainée dans ladite piste de guidage
- la roue liée à l'axe de rotation a de ce fait au moins une partie de circonférence en contact avec ou arrêtée par un des côtés de la piste.

En particulier, les deuxième et troisième roues (12553) roulent chacune avec un léger jeu dans un espace de guidage (12555) où elles ont la liberté de pivoter autour de l'axe (12557) de la première roue (12554).

La première roue (12554) roule avec un léger jeu dans un espace de guidage (12556) où elle a la liberté de pivoter autour de l'axe (12558) des autres deuxième et troisième roues (12553).

A cet effet, les roues ont des diamètres inférieurs à un espacement entre les côtés de piste de guidage de telle sorte qu'un jeu existe entre chaque roue et sa piste de guidage.

Comme précédemment mentionné, les axes de rotation (12557, 12558) sont solidarisés sur le chariot de telle sorte que la première roue (12554) est apte, entre les deux côtés de sa piste de guidage (12556), à pivoter autour du second axe de rotation (12558) entrainant la deuxième et de la troisième roue. Analogiquement, les axes de rotation (12557, 12558) sont solidarisés sur le chariot de telle sorte que la deuxième et la troisième roue (12553) sont aptes, entre les côtés de leurs pistes de guidage respectives, à pivoter autour de l'axe de rotation de la première roue (12554).

Comme l'indiquent les flèches sur la figure 5, le système de guidage offre donc trois possibilités de mouvements (à quatre degrés de liberté par rapport au support 1225 de la figure 4b) pouvant aussi être dynamiquement simultanés :
- Déplacement linéaire suivant un axe perpendiculaire aux axes (12557) et (12558),
- Pivotement autour du premier axe (12557),
- Pivotement autour du deuxième axe (12558).

Au lieu d'un seule roue par piste de guidage, le système de guidage peut prévoir qu'au moins une des trois roues est dédoublée en deux roues juxtaposées ayant des axes de rotation distincts et parallèles de telle sorte que chacune desdites deux roues soit en contact avec un des côtés de la piste de guidage. Ceci peut permettre d'éviter un trop grand jeu entre roue et voie de guidage de la roue. Pour faciliter la réalisation d'un système à 3 fois 2 roues au lieu de 3 roues simples, les roues (au moins 1 sur 2 de chaque couple) sont prévues réglables dans le sens travers des pistes de guidage pour mieux plaquer au côté de piste.

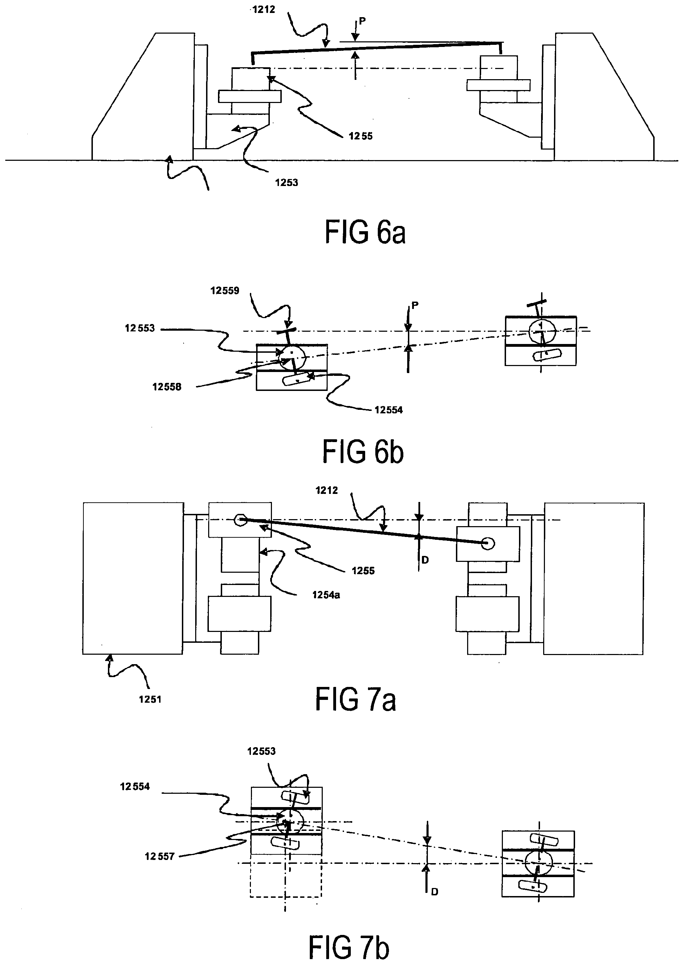

Les **figures 6 et 7** montrent des exemples de configuration du système de guidage, c'est-à-dire en fonction du positionnement des supports d'une des poutres d'essorage par soufflage d'air selon figures 4a et 5.

Les figures 6a, 6b présentent le système de guidage selon l'invention en mode d'inclinaison (pente) de poutre sous deux vues de côté.

Les figures 7a, 7b présentent le système de guidage selon l'invention en mode de déviation de poutre sous deux vues de dessus.

En figure 6a, les deux tables de déplacement vertical (1252) placent les consoles (1253) et les supports associés (1255) à deux altitudes différentes imprimant ainsi une inclinaison ou pente (P) à la poutre (1212). La figure 6b montre que la dite première roue (12554) de chaque support pivote autour du dit deuxième axe (12558) des deux autres roues associées (12553). Les plans de portage (12559) de la poutre (1212) sont alignés suivant l'angle (P) de pente de ladite poutre. Non représenté mais possible, un guidage linéaire des extrémités de poutre le long de la surface de la bande est aussi rendu possible, si le premier axe (12557) de chaque chariot sur les supports (1255) doit être translaté vers ou éloigné des arêtes de bande.

En figure 7a, les deux tables de déplacement horizontal (1254a) placent les supports (1255) en deux position constituant un angle (horizontal) de déviation (D) de la poutre (1212) par rapport à l'axe de symétrie des supports (1251) de poutre. La figure 7b montre que les deuxième et troisième roues (12553) de chaque support pivotent autour de l'axe vertical (12557) de la première roue associée (12554). Les axes (12557) sont alignés suivant l'angle (D) de déviation de la poutre (1212).

## Revendications

1. Système de guidage d'un chariot (12552) dans un châssis (12551) pour lequel :
- le système est adapté au guidage d'un dispositif d'essorage d'un produit de galvanisation,
- le châssis (12551) est muni de trois pistes parallèles (12555, 12556) de guidage linéaire parmi lesquelles une première piste (12556) s'étend centralement sur le châssis et une deuxième et une troisième piste (12555) sont disposées latéralement à la première piste,
- le chariot (12552) dispose d'au moins deux axes de rotation (12557, 12558), un premier axe (12557) entrainant au moins une première roue (12554) dans la première piste de guidage (12556) et un second axe (12558) entraînant au moins une deuxième et au moins une troisième roue (12553) respectivement dans la deuxième et la troisième piste de guidage (12555),
- les deux axes de rotation (12557, 12558) sont perpendiculaires.

2. Système selon revendication 1, pour lequel les deux axes de rotation (12557, 12558) sont sécants.

3. Système selon revendication 1 ou 2, pour lequel :
- chaque piste de guidage comprend un fond et deux côtés,
- lesdits côtés sont parallèles à l'axe de rotation de la roue entrainée dans ladite piste de guidage.

4. Système selon revendication 3, pour lequel les axes de rotation (12557, 12558) sont solidarisés sur le chariot de telle sorte que la première roue (12554) est apte, entre les deux côtés de sa piste de guidage (12556), à pivoter autour du second axe de rotation (12558) entrainant la deuxième et de la troisième roue.

5. Système selon revendication 3 ou 4, pour lequel les axes de rotation (12557, 12558) sont solidarisés sur le chariot de telle sorte que la deuxième et la troisième roue (12553) sont aptes, entre les côtés de leurs pistes de guidage respectives, à pivoter autour de l'axe de rotation de la première roue (12554).

6. Système selon une des revendications 3 à 5, pour lequel les roues ont des diamètres inférieurs à un espacement entre les côtés de piste de guidage de telle sorte qu'un jeu existe entre chaque roue et sa piste de guidage.

7. Système selon une des revendications 3 à 5, pour lequel au moins une des trois roues est dédoublée en deux roues juxtaposées ayant des axes de rotation distincts et parallèles de telle sorte que chacune desdites deux roues soit en contact avec un des côtés de la piste de guidage.

8. Méthode de guidage d'une extrémité d'une poutre en mouvement tridimensionnel selon laquelle ladite extrémité est fixée rigidement au chariot (12552) du système selon une des revendications précédentes.

9. Méthode selon revendication 8, pour laquelle une autre extrémité de ladite poutre est fixée rigidement à un autre chariot.

10. Méthode selon revendication 9, pour laquelle les extrémités sont celles d'essoreurs formant deux poutres distinctes adaptées pour l'essorage de part et d'autre d'une bande en défilement par soufflage d'air ou par champ électromagnétique et pour laquelle les dites extrémités et leurs chariots respectivement fixés sont mues par plusieurs actionneurs indépendants assurant un réglage vertical d'altitude, un réglage horizontal perpendiculaire au plan de la bande et un réglage horizontal parallèle au plan de la bande.

## Patentansprüche

1. System zur Führung eines Wagens (12552) in einem Gestell (12551), wobei:
- das System für die Führung einer Vorrichtung zur Abstreifung eines Galvanisierungsprodukts ausgelegt ist,
- das Gestell (12551) mit drei parallelen Bahnen (12555, 12556) zur Linearführung versehen ist, von denen sich eine erste Bahn (12556) mittig auf dem Gestell erstreckt und eine zweite und eine dritte Bahn (12555) seitlich von der ersten Bahn angeordnet sind,
- der Wagen (12552) über wenigstens zwei Drehachsen (12557, 12558) verfügt, wobei eine erste Achse (12557) wenigstens ein erstes Rad (12554) in der ersten Führungsbahn (12556) antreibt und eine zweite Achse (12558) wenigstens ein zweites und wenigstens ein drittes Rad (12553) in der zweiten bzw. der dritten Führungsbahn (12555) antreibt,
- die zwei Drehachsen (12557, 12558) zueinander senkrecht sind.

2. System nach Anspruch 1, wobei die zwei Drehachsen (12557, 12558) sich schneiden.

3. System nach Anspruch 1 oder 2, wobei:
- jede Führungsbahn einen Boden und zwei Seiten aufweist,
- diese Seiten parallel zur Drehachse des angetriebenen Rades in der Führungsbahn sind.

4. System nach Anspruch 3, wobei die Drehachsen (12557, 12558) fest mit dem Wagen verbunden sind, derart, dass das erste Rad (12554) in der Lage ist, zwischen den zwei Seiten seiner Führungsbahn (12556) um die zweite Drehachse (12558) zu schwenken, die das zweite und das dritte Rad antreibt.

5. System nach Anspruch 3 oder 4, wobei die Drehachsen (12557, 12558) fest mit dem Wagen verbunden sind, derart, dass das zweite und das dritte Rad (12553) in der Lage sind, zwischen den Seiten ihrer jeweiligen Führungsbahnen um die Drehachse des ersten Rades (12554) zu schwenken.

6. System nach einem der Ansprüche 3 bis 5, wobei die Räder Durchmesser aufweisen, die kleiner als ein Abstand zwischen den Führungsbahnseiten sind, derart, dass zwischen jedem Rad und seiner Führungsbahn ein Zwischenraum vorhanden ist.

7. System nach einem der Ansprüche 3 bis 5, wobei wenigstens eines der drei Räder in zwei nebeneinander angeordnete Räder aufgespalten ist, die verschiedene und parallele Drehachsen aufweisen, derart, dass jedes dieser zwei Räder sich mit einer der Seiten der Führungsbahn in Kontakt befindet.

8. Verfahren zur Führung eines Endes eines eine dreidimensionale Bewegung ausführenden Trägers, gemäß dem das Ende starr am Wagen (12552) des Systems nach einem der vorhergehenden Ansprüche befestigt ist.

9. Verfahren nach Anspruch 8, wobei ein anderes Ende des Trägers starr an einem anderen Wagen befestigt ist.

10. Verfahren nach Anspruch 9, wobei die Enden diejenigen von Abstreifern sind, die zwei verschiedene Träger bilden, die zum Abstreifen beiderseits eines durchlaufenden Bandes durch Anblasen mit Luft oder mittels eines Magnetfelds ausgelegt sind, und wobei die Enden und ihre jeweils befestigten Wagen von mehreren unabhängigen Aktuatoren bewegt werden, die eine vertikale Höhenverstellung, eine horizontale Verstellung senkrecht zur Ebene des Bandes und eine horizontale Verstellung parallel zur Ebene des Bandes sicherstellen.

## Claims

1. System for guiding a carriage (12552) within a frame (12551) for which:
- the system is suitable for guiding a device for wiping a galvanization product;
- the frame (12551) is provided with three parallel linear guide tracks (12555, 12556) of which a first track (12556) runs centrally along the frame and second and third tracks (12555) are arranged laterally with respect to the first track;
- the carriage (12552) exhibits at least two axes of rotation (12557, 12558), a first axis (12557) driving at least a first wheel (12554) within the first guide track (12556) and a second axis (12558) driving at least a second and at least a third wheel (12553) within the second and third guide tracks (12555), respectively;
- the two axes of rotation (12557, 12558) are perpendicular.

2. System according to Claim 1, for which the two axes of rotation (12557, 12558) intersect.

3. System according to Claim 1 or 2, for which:
- each guide track comprises a bottom and two sides;
- said sides are parallel to the axis of rotation of the wheel driven within said guide track.

4. System according to Claim 3, for which the axes of rotation (12557, 12558) are rigidly connected to the carriage such that the first wheel (12554) is capable, between the two sides of its guide track (12556), of pivoting about the second axis of rotation (12558) driving the second and third wheels.

5. System according to Claim 3 or 4, for which the axes of rotation (12557, 12558) are rigidly connected to the carriage such that the second and third wheels (12553) are capable, between the sides of their respective guide tracks, of pivoting about the axis of rotation of the first wheel (12554).

6. System according to one of Claims 3 to 5, for which the diameters of the wheels are smaller than a spacing between the sides of the guide track such that a clearance is present between each wheel and its guide track.

7. System according to one of Claims 3 to 5, for which at least one of the three wheels is split into two juxtaposed wheels having distinct and parallel axes of rotation such that each of said two wheels makes contact with one of the sides of the guide track.

8. Method for guiding one end of a beam moving three-dimensionally, in which said end is rigidly attached to the carriage (12552) of the system according to one of the preceding claims.

9. Method according to Claim 8, for which another end of said beam is rigidly attached to another carriage.

10. Method according to Claim 9, for which the ends are those of wipers forming two distinct beams that are suitable for wiping on either side of a running strip via air stream or via electromagnetic field, and for which said ends and their respectively attached carriages are moved by a plurality of independent actuators providing vertical altitude adjustment, horizontal adjustment perpendicular to the plane of the belt and horizontal adjustment parallel to the plane of the belt.
